# EUROPÄISCHE PATENTANMELDUNG

(11) **EP 3 715 681 A1**
(43) Veröffentlichungstag der Anmeldung: **30.09.2020**
(21) Anmeldenummer: 19166288.1
(22) Anmeldetag: 29.03.2019
(51) Int. Cl.: F16J 15/3268

(54) **WELLENANORDNUNG, GETRIEBE, ELEKTRISCHE MASCHINE UND WARTUNGSVERFAHREN**

(71) Anmelder: Flender GmbH, 46395 Bocholt (DE)
(72) Erfinder: Düvel, Volker, 46397 Bocholt (DE); Leiting, Christian, 46395 Bocholt (DE); Leuer, Philipp, 45130 Essen (DE); Mahn, Gunter, 04603 Nobitz (DE)
(74) Vertreter: Maier, Daniel Oliver

(57) **Zusammenfassung**

Die Erfindung betrifft eine Wellenanordnung (20), die eine Welle (10) umfasst, die gegenüber einer Gehäusewandung (18) drehbar angebracht ist. Ein Wellendichtring (30) ist darin zwischen der Welle (10) und einem Dichtabschnitt (32) der Gehäusewandung (18) angeordnet. Erfindungsgemäß weist die Wellenanordnung (20) eine Mehrzahl an lösbaren Abstandselementen (42) zu einem Einstellen einer Axialposition (43) des Wellendichtrings (42) auf. Die Erfindung betrifft auch ein Getriebe (52) und eine Elektrische Maschine (54), die über eine entsprechende Wellenanordnung (20) verfügen. Gleichermaßen betrifft die Erfindung ein Verfahren (100) zur Wartung einer entsprechenden Wellenanordnung (20). In einem ersten Schritt (110) erfolgt ein Entfernen eines Wellendichtrings (30) von der Welle (10) und ein Bereitstellen eines Austausch-Wellendichtrings (38). In einem weiteren Schritt (120) erfolgt ein Einstellen einer Axialposition (43) für den Austausch-Wellendichtring (38). Ferner erfolgt in einem dritten Schritt (130) ein Anbringen des Austausch-Wellendichtrings (38) auf der Welle (10). Erfindungsgemäß wird dabei bei einer Mehrzahl von lösbaren Abstandselementen (42), die im Bereich der Welle (10) angebracht sind, zumindest ein lösbares Abstandselement (42) entfernt, hinzugefügt und/oder durch ein anderes lösbares Abstandselement (42) ersetzt.

## Beschreibung

Die Erfindung betrifft eine Wellenanordnung und ein Getriebe, das eine erfindungsgemäße Wellenanordnung umfasst. Die Erfindung betrifft auch eine elektrische Maschine, die mit einer erfindungsgemäßen Wellenanordnung ausgestattet ist. Gleichermaßen betrifft die Erfindung ein Verfahren zur Wartung einer entsprechenden Wellenanordnung.

Aus der Druckschrift DE 101 45 087 C2 ist ein axial wirkender Dichtring bekannt, der ein Metallgehäuse aufweist, an das ein elastomerer Kunststoff angeformt ist. Am elastomeren Kunststoff wiederum ist ein Gleitring angebracht. Ferner ist ein Blechstreifen an einer drehbaren Welle angebracht, den der Gleitring im Betrieb berührt. Der Gleitring weist eine Verlängerung auf, die als Staublippe dient.

EP 1 591 698 A1 offenbart einen Radialwellendichtring, der ein anvulkanisiertes Dichtelement aufweist. Das Dichtelement ist aus einem elastomeren Werkstoff hergestellt und verfügt über eine Dichtlippe. Eine Kante der Dichtlippe wird im Betrieb an eine drehbare Welle angedrückt, um eine Dichtwirkung zu erzielen. Die Dichtlippe ist im Wesentlichen bogenförmig ausgebildet und kann mit einer zusätzlichen Staublippe versehen sein.

Drehende Wellen werden bei einer Vielzahl an Maschinen eingesetzt, beispielsweise Getrieben oder elektrischen Maschinen. Die drehenden Wellen sind gegen den Austritt von Flüssigkeiten im Inneren der Maschine oder gegen den Eintritt von Verschmutzungen von außen abzudichten. Es besteht deshalb Bedarf an einer Abdichtung von drehenden Wellen, die dauerhaft eine zuverlässige Dichtwirkung bieten und gleichzeitig schnell und einfach zu warten sind. Der Erfindung liegt die Aufgabe zugrunde, eine Möglichkeit zum Abdichten einer Welle zur Verfügung zu stellen, die in zumindest einem der genannten Aspekte eine Verbesserung bietet.

Die Aufgabenstellung wird durch eine erfindungsgemäße Wellenanordnung gelöst. Die Wellenanordnung weist eine Welle auf, die drehbar gegenüber einer Gehäusewandung angebracht ist. In einem Bereich der Gehäusewandung ist ein Dichtabschnitt ausgebildet, der mittelbar mit der Welle zusammenwirkt, um eine Dichtwirkung zwischen einem Innenraum und einer Umgebung zu erzielen. Im Bereich des Dichtabschnitts ist ein Wellendichtring angeordnet, der in Kontakt mit der Gehäusewandung und der Welle steht und so einen Spalt zwischen der Gehäusewandung und der Welle abdichtet. Der Wellendichtring ist im Dichtabschnitt in eine Axialrichtung beweglich ausgebildet. Unter einer Axialrichtung ist dabei eine Richtung entlang einer Drehachse der Welle zu verstehen. Die Wellenanordnung weist erfindungsgemäß eine Mehrzahl an lösbaren Abstandselementen auf, die wie der Wellendichtring in eine Axialrichtung beweglich ausgebildet sind. Die Gehäusewandung und/oder die Welle sind zu einem axialen Abstützen der lösbaren Abstandselemente ausgebildet. Die Abstandselemente sind insoweit lösbar, dass diese voneinander, von der Gehäusewandung bzw. der Welle im Wesentlichen zerstörungsfrei trennbar, also wiederverwendbar, sind. Zum Gehäuse kann auch ein Abschnitt eines Lagerdeckels gehören, der vom weiteren Gehäuse lösbar ist. Die lösbaren Abstandselemente sind in einer wählbaren Zusammenstellung im Bereich des Wellendichtrings montierbar ausgebildet. Infolgedessen weisen die lösbaren Abstandselemente eine einstellbare kombinierte Axialabmessung auf. Dadurch ist eine Axialposition des Wellendichtrings mittels der lösbaren Abstandselemente gezielt einstellbar. Der Wellendichtring ist somit bei einem Wartungsvorgang beispielsweise durch Hinzufügen oder Entfernen mindestens eines lösbaren Abstandselements axial neu positionierbar.

Wellendichtringe können bei einer drehenden Welle auf deren Oberfläche im Betrieb Rillen oder Riefen erzeugen. Dadurch tritt eine Degradation der Dichtwirkung am Wellendichtring auf. Da die erfindungsgemäßen lösbaren Abstandselemente ein Einstellen der Axialposition des Wellendichtrings erlauben, ist der Wellendichtring axial neu positionierbar bevor eine unerwünscht starke Degradation dessen Dichtwirkung einsetzt. Ferner kann ein Einstellen des Wellendichrings auf eine neue Axialposition bei einer Wartung mit einem Ersetzen des Wellendichtrings kombiniert werden. Infolgedessen kann schnell und kosteneffizient eine neuwertige Dichtung zwischen der drehenden Welle und dem Gehäusewandung erzielt werden. Je höher die Anzahl der lösbaren Abstandselemente ist, umso öfter ist dies möglich. Durch die erfindungsgemäße Wellenanordnung kann die Güte einer Dichtwirkung über eine längere Dauer aufrechterhalten werden, was wiederum einen längeren wirtschaftlichen Betrieb einer entsprechenden Maschine bedeutet.

In einer Ausführungsform der beanspruchten Wellenanordnung weist der Wellendichtring eine Dichtlippe auf. Die Dichtlippe liegt im Betrieb im Wesentlichen linienförmig an einer Mantelfläche der Welle oder an der Gehäusewandung an. Ein so ausgebildeter linienförmiger Kontakt ist dazu geeignet, an der Mantelfläche der Welle oder an der Gehäusewandung eine Rille zu erzeugen. Je höher eine Anpresskraft am linienförmigen Kontakt ist, umso höher ist die Dichtwirkung. Gleichzeitig bedeutet eine erhöhte Anpresskraft am linienförmigen Kontakt auch einen erhöhten Verschleiß des Wellendichtrings. Je stärker der Wellendichtring im Bereich des linienförmigen Kontakts verschleißt, umso stärker ist dort die Dichtwirkung an einer vorhandenen Rille reduziert. Da die beanspruchte Wellenanordnung in einfacher Weise zu warten ist und der Wellendichtring von einer vorhandenen Rille entfernt neu montierbar ist, können Wellendichtringe mit einer erhöhten Anpresskraft eingesetzt werden. Ein Abwägen zwischen einer sicheren Betriebsdauer für die Dichtwirkung und einer Intensität der Dichtwirkung tritt durch die beanspruchte Wellenanordnung in den Hintergrund. Infolgedessen erlaubt die beanspruchte Wellenanordnung es, die Güte einer Dichtwirkung zu steigern, ohne dadurch übermäßige Nachteile hinnehmen zu müssen.

Des Weiteren können die lösbaren Abstandselemente jeweils als Ring oder C-förmig ausgebildet sein. Die ringförmigen Abstandselemente können, wie beispielsweise Unterlegscheiben, stapelbar ausgebildet sein, also von Hand voneinander trennbar sein. Derartige ringförmige oder C-förmige lösbare Abstandselemente sind in einer breiten Spanne von Abmessungen, insbesondere in puncto Innendurchmesser und Dicke, einfach herstellbar und auch ersetzbar. Alternativ oder ergänzend können die lösbaren Abstandselemente auch jeweils als geteilter Ring ausgebildet sein. Des Weiteren sind auch Kombinationen unterschiedlicher entsprechender lösbarer Abstandselemente möglich. Infolgedessen basiert die beanspruchte Wellenanordnung auf kosteneffizienten Komponenten.

Darüber hinaus können zumindest zwei der lösbaren Abstandselemente eine gleiche Dicke aufweisen. Dies verwirklicht das Prinzip der Gleichteileverwendung und erlaubt eine einfache Umsetzung der beanspruchten Wellenanordnung. Bei lösbaren Abstandselementen mit gleicher Dicke entspricht eine Anzahl an möglichen Axialpositionen des Wellendichtrings der Anzahl an lösbaren Abstandselementen plus Eins. Somit kann in einfacher Weise eine Vielzahl an Axialpositionen für den Wellendichtring durch eine entsprechend gewählte Dicke der lösbaren Abstandselemente erzielt werden. Die konstruktive Auslegung der Abstandselemente der beanspruchten Lösung ist somit im Wesentlichen auf eine Größe reduzierbar. Dadurch ist die beanspruchte Wellenanordnung in einfacher Weise skalierbar und für eine breite Spanne an Einsatzzwecken geeignet.

Alternativ können zumindest zwei der lösbaren Abstandselemente unterschiedliche Dicken aufweisen. Bei lösbaren Abstandselementen unterschiedlicher Dicke kann durch Auswählen eines zu entfernenden oder hinzuzufügenden lösbaren Abstandselements deren kombinierte Axialabmessung eingestellt werden. Dementsprechend ergibt sich eine erhöhte Anzahl an möglichen Axialpositionen für den Wellendichtring. Beispielsweise kann, je nach Breite einer in einer vorherigen Axialposition des Wellendichtrings entstandenen Rille, eine neue Axialposition einem ausreichenden Abstand gewählt werden. Je breiter die zuvor entstandene Rille ist, umso höher kann die neue Axialposition gewählt werden. Die Vorteile der beanspruchten Lösung werden so insgesamt in gesteigerter Weise erzielt.

In einer weiteren Ausführungsform der beanspruchten Wellenanordnung weist diese zumindest drei lösbare Abstandselemente mit unterschiedlichen Dicken auf. Aus den zumindest drei lösbaren Abstandselementen sind beliebige Untermengen, also Teilgruppen, bildbar. Daraus ergibt sich wiederum für jede der Untermengen eine kombinierte Axialabmessung. Die kombinierten Axialabmessungen, die im Wesentlichen jeweils einer Summe der Dicken der jeweiligen lösbaren Abstandselemente entsprechen, sind dabei unterschiedlich. Somit sind die Dicken jeglicher Untermenge, die aus den zumindest drei lösbaren Abstandselementen unterschiedlicher Dicke bildbar sind, zueinander summenfremd. Dies bedeutet, dass die Anzahl an erzielbaren Axialpositionen für den Wellendichtring einer Anzahl an kombinatorischen Möglichkeiten zur Zusammenstellung der zumindest drei lösbaren Abstandselemente mit unterschiedlicher Dicke entspricht. Dadurch wird die Anzahl an möglichen Axialpositionen für den Wellendichtring mit einer geringen Anzahl an eingesetzten Komponenten weiter gesteigert. Die Vorteile der beanspruchten Lösungen werden so in einem erhöhten Maß erzielt.

Ferner kann die Dicke zumindest eines lösbaren Abstandselements zumindest der Breite der Rille entsprechen, die durch die Dichtlippe erzeugbar ist. Dadurch ist ein axialer Abstand zwischen zwei Axialpositionen des Wellendichtrings zumindest so hoch, dass der Wellendichtring nach einer Montage an einer unbeschädigten, also rillenfreien, Stelle einen linienförmigen Kontakt herstellt. Auch der durch ein neues Zusammenstellen von lösbaren Abstandselementen kleinste erzeugbare Versatz entlang der Axialrichtung gewährleistet einen im Wesentlichen neuwertigen linienförmigen Kontakt an der Dichtlippe des Wellendichtrings. Dadurch sind sämtliche Axialpositionen, die für den Wellendichtring einstellbar sind, auch als Endposition nach einer Montage nutzbar. Das konzeptionelle Potential der beanspruchten Lösung wird so vollständig ausgenutzt.

Darüber hinaus kann der Wellendichtring zwischen einem Lagerdeckel und einem Lager der Welle angeordnet sein. Der Lagerdeckel ist in einer Öffnung in der Gehäusewandung aufnehmbar und dazu geeignet, eine entsprechende Öffnung zu verschließen. Die lösbaren Abstandselemente und der Wellendichtring sind infolgedessen einfach zugänglich. Eine Demontage der Welle, also ein Entnehmen der Welle aus dem Lager, ist bei einer Wartung des Wellendichtrings somit entbehrlich. Das Einstellen der Axialposition des Wellendichtrings mittels der lösbaren Abstandselemente ist dadurch einfach und schnell durchführbar.

In einer weiteren Ausführungsform der beanspruchten Wellenanordnung ist der Wellendichtring im montierten Zustand axial gegen die lösbaren Abstandselemente vorgespannt. Die Vorspannung ist dabei beispielsweise mittels des Lagerdeckels erzeugbar, der mit dem Gehäuse lösbar verbindbar ist. Dabei genügt eine reduzierte axiale Vorspannkraft, um die Axialposition des Wellendichtrings zuverlässig festzulegen. Dadurch werden die Vorteile der beanspruchten Lösung weiter gesteigert. Alternativ oder ergänzend kann der Wellendichtring auch in das Gehäuse eingepresst werden, also durch eine Radialkraft gehalten werden.

Die zugrundeliegende Aufgabenstellung wird auch durch ein erfindungsgemäßes Getriebe gelöst. Das Getriebe kann als Stirnradgetriebe, als Kegelradgetriebe, als Hypoid-Getriebe, als Planetengetriebe, oder als eine Kombination dieser Typen ausgebildet sein. Das Getriebe umfasst mindestens ein Zahnradpaar, dessen Zahnräder miteinander kämmen, also drehmomentübertragend verbunden sind. Ferner umfasst das Getriebe eine erste und eine zweite Welle, die drehbar im Getriebe angeordnet sind und zum Übertragen von Drehmoment mit den Zahnrädern gekoppelt sind. Dabei gehört die erste und/oder die zweite Welle zu einer Wellenanordnung gemäß einer der oben beschriebenen Ausführungsformen. An der ersten und/oder zweiten Welle, die zur einer entsprechenden Wellenanordnung gehören, sind die Wellendichtringe in einfacher Weise austauschbar. Dabei ist insbesondere eine Demontage der ersten und/oder zweiten Welle entbehrlich. Dadurch, dass ein Wellendichtring in der beschriebenen Wellenanordnung in einfacher Weise axial positionierbar ist, ist es möglich, jedes Mal die Dichtlippe an einem unbeschädigten, also rillenfreien, Abschnitt zu positionieren und so eine im Wesentlichen neuwertige Dichtwirkung zu erzielen. Die wirtschaftlich nutzbare Lebensdauer des Getriebes wird so erhöht.

Ebenso wird die beschriebene Aufgabenstellung durch eine erfindungsgemäße elektrische Maschine gelöst, die als Motor oder Generator ausgebildet sein kann. Die elektrische Maschine weist einen Stator und einen Rotor auf, wobei der Rotor mit einer Welle drehmomentübertragend verbunden ist. Die Welle gehört dabei erfindungsgemäß zu einer Wellenanordnung gemäß einer der oben skizzierten Ausführungsformen. Bei einem Generator oder Motor, die mit einer hohen Drehzahl betrieben werden, ist in besonderem Ausmaß mit einer rückläufigen Dichtwirkung an einem Wellendichtring infolge einer Rillenbildung zu rechnen. Die beanspruchte Wellenanordnung vereinfacht die Wartung einer solchen elektrischen Maschine und erhöht deren wirtschaftlich nutzbare Lebensdauer.

Gleichermaßen wird die skizzierte Aufgabe durch ein erfindungsgemäßes Verfahren zur Wartung einer Wellenanordnung gelöst. Die Wellenanordnung umfasst eine Welle, die drehbar in einem Gehäuse angeordnet ist, das eine Gehäusewandung umfasst. In einem ersten Schritt erfolgt ein Entfernen eines Wellendichtrings von einer montierten Wellenanordnung. Dazu wird der Wellendichtring von der Welle entfernt und ein Austausch-Wellendichtring bereitgestellt. In einem zweiten Schritt erfolgt ein Einstellen einer Axialposition für den Austausch-Wellendichtring. Erfindungsgemäß erfolgt das Einstellen der Axialposition des Wellendichtrings durch ein Hinzufügen, ein Entfernen, oder ein Ersetzen zumindest eines lösbaren Abstandselements. Das zumindest eine lösbare Abstandselement ist im Bereich der Welle angebracht, beispielsweise als ringförmiges Abstandselement, das die Welle umgibt. Die lösbaren Abstandselemente bilden zusammen einen Stapel, dessen axiale Gesamtlänge die Axialposition eines Wellendichtrings bzw. eines Austausch-Wellendichtrings in der Wellenanordnung bestimmt. In einem dritten Schritt erfolgt ein Anbringen des Austausch-Wellendichtrings im Bereich der Welle. Die Axialposition des Austausch-Wellendichtrings unterscheidet sich dabei von der Axialposition des zuvor vorhandenen Wellendichtrings. Das erfindungsgemäße Verfahren ist schnell und einfach durchführbar und erfordert nur ein Minimum an Werkzeug. Ferner ist ein Demontieren der Welle entbehrlich. Durch das neue Positionieren und die Verwendung eines Austauschwellenrings werden die Nachteile eines verschleißenden Wellendichtrings und einer Rillenbildung an einer Gegenlauffläche des Wellendichtrings, also der Welle oder der Gehäusewandung, überwunden. Mittels des erfindungsgemäßen Verfahrens wird somit bei jedem entsprechenden Wartungsvorgang eine Dichtwirkung erzielt wie bei einer Erstmontage der Wellenanordnung. Dies erlaubt eine verlängerte kosteneffiziente Nutzung einer solchen Wellenanordnung, und damit einer Maschine, in der die Wellenanordnung eingesetzt ist.

In einer Ausführungsform des beanspruchten Verfahrens kann im zweiten Schritt die Axialposition des Austausch-Wellendichtrings gegenüber der Axialposition des Wellendichtrings, der zuvor verwendet wird, um eine Mindestdistanz versetzt sein. Die Mindestdistanz entspricht dabei einer Rillenbreite einer Rille, die von der Dichtlippe des Wellendichtrings erzeugt wird. Die Dichtlippe des Austausch-Wellendichtrings wird dadurch zumindest soweit versetzt, wie notwendig ist, um von der Rille, die durch den Wellendichtring hervorgerufen ist, unbeeinflusst den Austausch-Wellendichtring aufzunehmen. Bei entsprechend dimensionierten Abstandselementen kann die beanspruchte Lösung besonders kompakt gebaut werden. Insbesondere ist so auf einem reduzierten Bauraum eine erhöhte Zahl an erzielbaren Axialpositionen möglich. Die Vorteile der beanspruchten Lösung werden so in erhöhtem Umfang erzielt.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleiche technische Bedeutung haben. Es zeigen im Einzelnen:
- FIG 1: eine schematische Schnittansicht einer ersten Ausführungsform der beanspruchten Wellenanordnung;
- FIG 2: eine Detailansicht der ersten Ausführungsform der beanspruchten Wellenanordnung;
- FIG 3: einen schematischen Längshalbschnitt einer zweiten Ausführungsform der beanspruchten Wellenanordnung;
- FIG 4: eine schematische Ansicht von lösbaren Abstandselementen gemäß einer dritten Ausführungsform der beanspruchten Wellenanordnung;
- FIG 5: ein Ablaufdiagramm einer ersten Ausführungsform des beanspruchten Verfahrens;
- FIG 6: einen schematischen Aufbau eines beanspruchten Getriebes;
- FIG 7: einen schematischen Aufbau einer beanspruchten elektrischen Maschine.

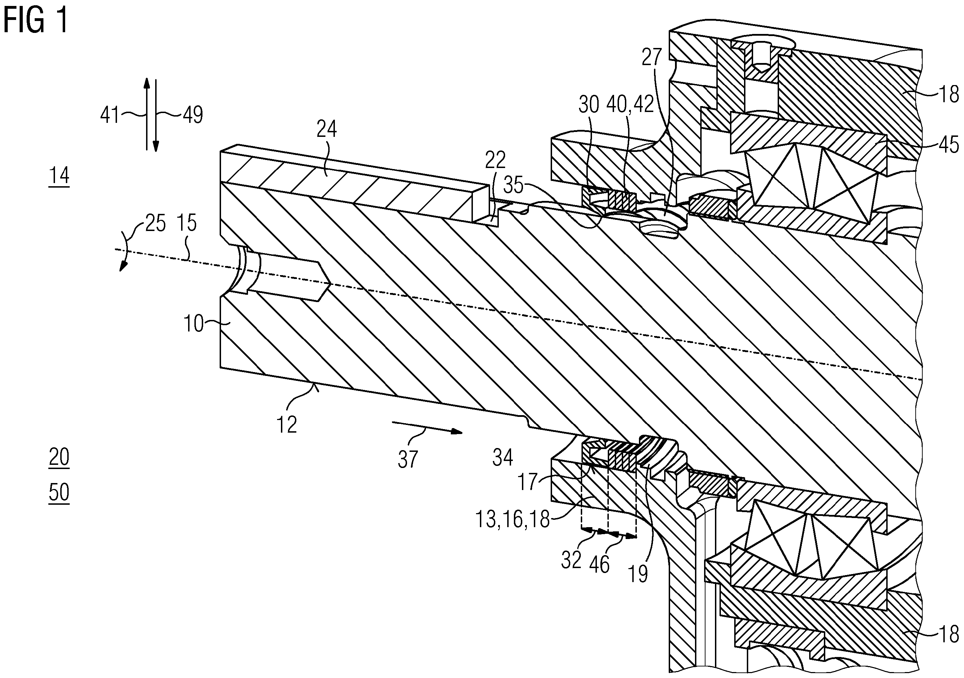

FIG 1 zeigt schematisch eine erste Ausführungsform einer beanspruchten Wellenanordnung 20 in einer Schnittansicht. Die Wellenanordnung 20 ist in einer nicht näher dargestellten Maschine 50 einsetzbar und umfasst eine Welle 10, die durch ein Einleiten eines Drehmoments 25 um eine Drehachse 15 drehbar in einem Gehäuse 16 aufgenommen ist. Zum Einleiten des Drehmoments 25 ist die Welle 10 mit einer Passfedernut 22 versehen, in der eine Passfeder 24 aufgenommen ist. Alternativ sind auch andere Verbindungsarten möglich, beispielsweise eine Kupplungsverzahnung, ein Presssitz, oder eine andere formschlüssige Verbindung. Ferner ist die Welle 10 in einem Lager 45 aufgenommen, das wiederum an einer Gehäusewandung 18 aufgenommen ist, die zum Gehäuse 16 gehört. Das Gehäuse 16 ist im Bereich des Wellendichtrings 30 als Lagerdeckel 13 ausgebildet. Die Welle 10 umgebend ist ein umlaufender Wellendichtring 30 in einem Bereich an der Gehäusewandung 18 angeordnet, der als Dichtabschnitt 32 dient. Durch den Wellendichtring 30 wird das Gehäuse 16 gegenüber einer Umgebung 14 verschlossen. Der Wellendichtring 30 liegt mit einem radial äußeren Abschnitt an einer Gehäuseinnenfläche 17 an. Durch den Wellendichtring 30 wird ein Austreten von Schmierstoff 27 in die Umgebung 14 und ein Eintreten von Verunreinigungen 37 aus der Umgebung 14 verhindert. Der Wellendichtring 30 weist an einem radial inneren Ende eine umlaufende Dichtlippe 35 auf, die im montierten Zustand im Kontakt mit einer Mantelfläche 12 der Welle 10 steht. Eine radial innere Richtung ist in FIG 1 durch den Pfeil 49 abgebildet, eine radial äußere Richtung durch den Pfeil 41.

Zwischen dem Wellendichtring 30 und dem Lager 45 ist eine Mehrzahl an Abstandselementen 42 angeordnet, die sich, entlang der Drehachse 15 betrachtet, an einer Schulter 19 axial abstützen, die an der Gehäusewandung 18 ausgebildet ist. Die Abstandselemente 42 sind separate Komponenten, die zu einem Stapel 40 zusammengefasst sind und wieder separierbar sind. Die Abstandselemente 42 sind somit lösbar ausgebildet und sind bei einer Demontage aus der Wellenanordnung 20 entnehmbar. Die zum Stapel 40 zusammengefassten lösbaren Abstandselemente 42 sind im Wesentlichen ringförmig ausgebildet und weisen entlang der Drehachse 15 betrachtet eine axiale Gesamtlänge 46 auf. Durch die Mehrzahl an lösbaren Abstandselementen 42 und deren Abstützen an der Schulter 19 ist eine Position des Wellendichtrings 30 entlang der Drehachse 15 einstellbar.

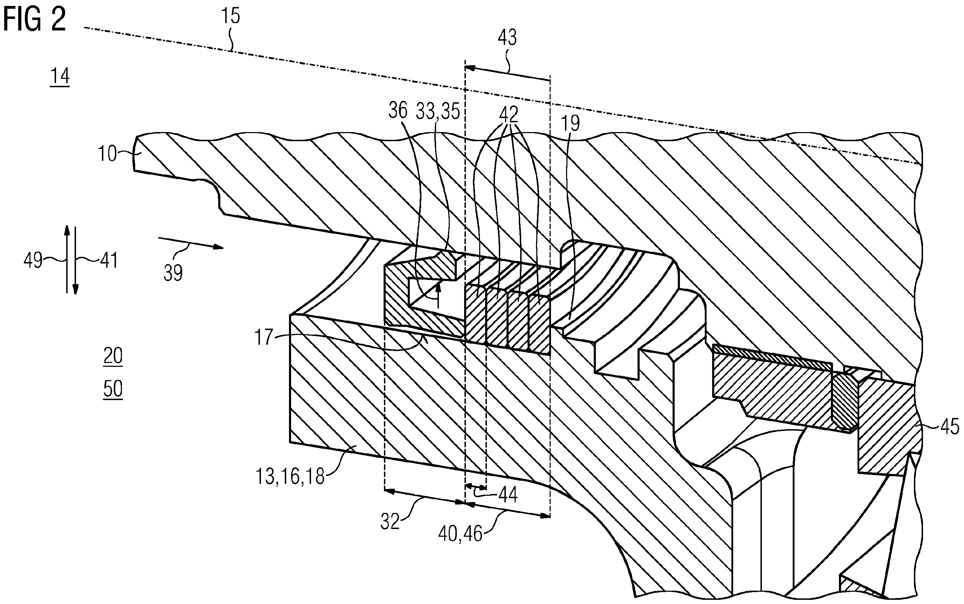

In FIG 2 ist die Ausführungsform gemäß FIG 1 abschnittsweise detaillierter dargestellt. Die in FIG 2 gezeigte Wellenanordnung 20 weist die Welle 10 auf, die in einem Lager 45 drehbar aufgenommen ist und aus dem Gehäuse 16 in die Umgebung 14 ragt. Das Gehäuse 16 ist im Bereich des Wellendichtrings 30 als Lagerdeckel 13 ausgebildet. Die Wellenanordnung 20 gehört zu einer nicht näher dargestellten Maschine 50. An der Gehäusewandung 18 ist im Wesentlichen im Bereich des Dichtabschnitts 32 eine Schulter 19 ausgebildet eine Mehrzahl an lösbaren Abstandselementen 42 abgestützt. Durch eine Summe an Dicken 44 der einzelnen lösbaren Abstandselemente 42 ist eine axiale Gesamtlänge 46 des Stapels 40 definiert, der aus den lösbaren Abstandselementen 42 zusammengesetzt ist. Die lösbaren Abstandselemente 42 gemäß FIG 2 weisen im Wesentlichen die gleiche Dicke 44 auf. Durch das Abstützen des Stapels 40 an der Schulter 19 wird eine Axialposition 43 des Wellendichtrings 30 eingestellt, die in FIG 2 auf die Lage der Schulter 19 und die Position einer Dichtlippe 35 des Wellendichtrings 30 bezogen ist. Der Wellendichtring 30 ist elastisch ausgebildet und übt eine radial nach innen gerichtete Rückstellkraft 36 auf die Mantelfläche 12 der Welle 10 aus. Gleichzeitig wird die Dichtlippe 35 durch die Rückstellkraft 36 des Wellendichtrings 30 in eine radial innere Richtung an die Mantelfläche 12 der Welle 10 gedrückt. Eine radial äußere Richtung ist in FIG 2 durch den Pfeil 41 abgebildet, eine radial innere Richtung durch den Pfeil 49. Infolgedessen wird ein umlaufender linienförmiger Kontakt zwischen der Dichtlippe 35 in der Welle 10 hervorgerufen, durch den wiederum eine Dichtwirkung erzielt wird. Die Dichtlippe 35 ist dazu geeignet, bei einer Drehung der Welle 10 in der Mantelfläche 12 eine Rille 33 auszubilden, die als Verschleiß einzustufen ist. Je tiefer die Rille 33 ausgebildet ist, umso schwächer ist die Dichtwirkung des Wellendichtrings 30.

Die Axialposition 43 des Wellendichtrings 30 ist durch ein entsprechendes Auswählen von lösbaren Abstandelementen 42 und Zusammenfassen zu einem Stapel 40 einstellbar. Die Anzahl an Axialpositionen 43, die für den Wellendichtring 30 nach FIG 2 einstellbar ist, entspricht der Anzahl an lösbaren Abstandselementen 42 plus Eins. Dadurch ist während der Lebensdauer der Maschine 50 entsprechend häufig die Axialposition 43 des Wellendichtrings 30 einstellbar. Bei jedem Einstellen einer neuen Axialposition 43 liegt an der Dichtlippe 35 ein unbeschädigter Bereich an der Mantelfläche 12 der Welle 10 vor, der frei von Rillen 33 ist. Dementsprechend wird bei jedem neuen Einstellen der Axialposition 43 des Wellendichtring 30 eine im Wesentlichen neuwertige Dichtwirkung erzielt. Die lösbaren Abstandselemente 42 sind einfach und kosteneffizient herstellbar. Ferner sind die lösbaren Abstandselemente 42 aus der Wellenanordnung 20 entnehmbar, wobei die Welle 10 im Lager 45 aufgenommen bleibt. Infolgedessen ist die Axialposition 43 des Wellendichtrings 30 ohne weitere Demontage der Welle 10 schnell und einfach einstellbar.

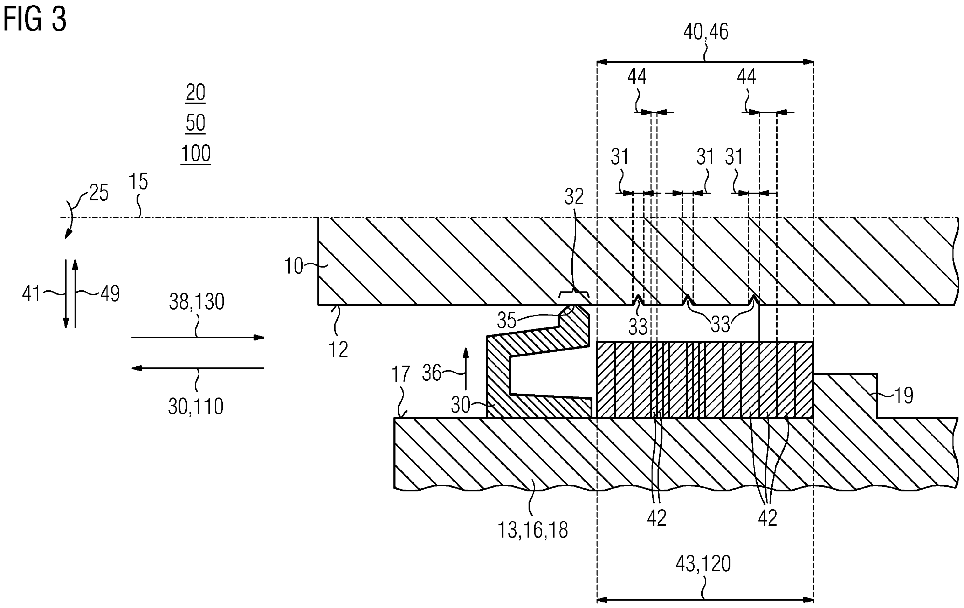

Des Weiteren ist in FIG 3 eine zweite Ausführungsform der beanspruchten Wellenanordnung 20 in einem Längshalbschnitt gezeigt, die in einer nicht näher abgebildeten Maschine 50 einsetzbar ist. Die Wellenanordnung 20 weist eine Welle 10 auf, die in einem Gehäuse 18 um eine Drehachse 15 drehbar aufgenommen ist. Das Gehäuse 16 ist im Bereich eines Wellendichtrings 30 als Lagerdeckel 13 ausgebildet. Eine Drehung der Welle 10 ist durch ein Einleiten eines Drehmoments 25 in die Welle 10 hervorrufbar. An der Gehäusewandung 18 ist an einer Gehäuseinnenfläche 17 ein Wellendichtring 30 angeordnet, der durch eine Rückstellkraft 36 eine angeformte Dichtlippe 35 an eine Mantelfläche 12 der Welle 10 drückt. Die Rückstellkraft 36 stützt sich in eine radial äußere Richtung an der Gehäusewandung 18 ab und wirkt in eine radial innere Richtung auf die Welle 10. Dadurch wird an der Mantelfläche 12 ein Dichtabschnitt ausgebildet. Eine radial innere Richtung ist durch den Pfeil 49 dargestellt, eine radial äußere Richtung durch den Pfeil 41. Die Dichtlippe 35 bildet an der Welle 10 einen im Wesentlichen linienförmigen Kontakt aus, durch den auf der Welle 10 Rillen 33 entstehen, die als Verschleiß einzustufen sind. Der Wellendichtring 30 nach FIG 3 ist bei einem Wartungsverfahren 100 in einem ersten Schritt 110 aus der Wellenanordnung 20 entnehmbar. Benachbart zum Wellendichtring 30 ist ein Stapel 40 mit einer Mehrzahl an lösbaren Abstandselementen 42 angeordnet, die im Wesentlichen ringförmig ausgebildet sind und an der Gehäuseinnenfläche 17 anliegen. Die lösbaren Abstandelemente 42 weisen unterschiedliche Dicken 44 auf, die zusammen eine axiale Gesamtlänge 46 des Stapels 40 definieren. Die lösbaren Abstandselemente 42 stützen sich in Axialrichtung, also entlang der Drehachse 15 betrachtet, an einer Schulter 18 ab, die an der Gehäusewandung 18 ausgebildet ist. Der Stapel 40 ist aus der Wellenanordnung 20 während eines zweiten Schritts 120 entnehmbar. Durch ein Hinzufügen, Entfernen und/oder Ersetzen einzelner lösbarer Abstandselemente 42 ist somit eine neue axiale Gesamtlänge 46 des Stapels 40 einstellbar. Durch das Abstützen des Wellendichtrings 30 an den lösbaren Abstandselementen 42 wird eine Axialposition 43 des Wellendichtrings 30 durch die lösbaren Abstandselemente 42 eingestellt. Infolge der unterschiedlichen Dicken 44 der lösbaren Abstandselemente 42 ist eine Vielzahl an möglichen axialen Gesamtlängen 46 des Stapels 40 einstellbar.

Gemäß FIG 3 sind verschleißbedingt an der Mantelfläche 12 der Welle 10 bereits mehrere Rillen 33 ausgebildet, die bei Wellendichtringen 30 in vorherigen Axialpositionen 43 hervorgerufen sind. Die Rillen 33 weisen jeweils eine Rillenbreite 31 auf, die geringer ist als die Dicke 44 des kleinsten lösbaren Abstandselements. Diese geringste Dicke 44 bei den lösbaren Abstandselementen 42 führt dazu, dass jedes Verändern des Stapels 40 zu einer derart veränderten axialen Gesamtlänge 46 des Stapels 40 führt, dass die Dichtlippe 35 hinreichend weit entfernt von einer vorhandenen Rille 33 positioniert wird. Der Wellendichtring 30 nach FIG 3 ist ferner bei einem dritten Schritt 130 des Wartungsverfahrens 100 durch einen im Wesentlichen baugleichen Austausch-Wellendichtungsring 38 ersetzbar.

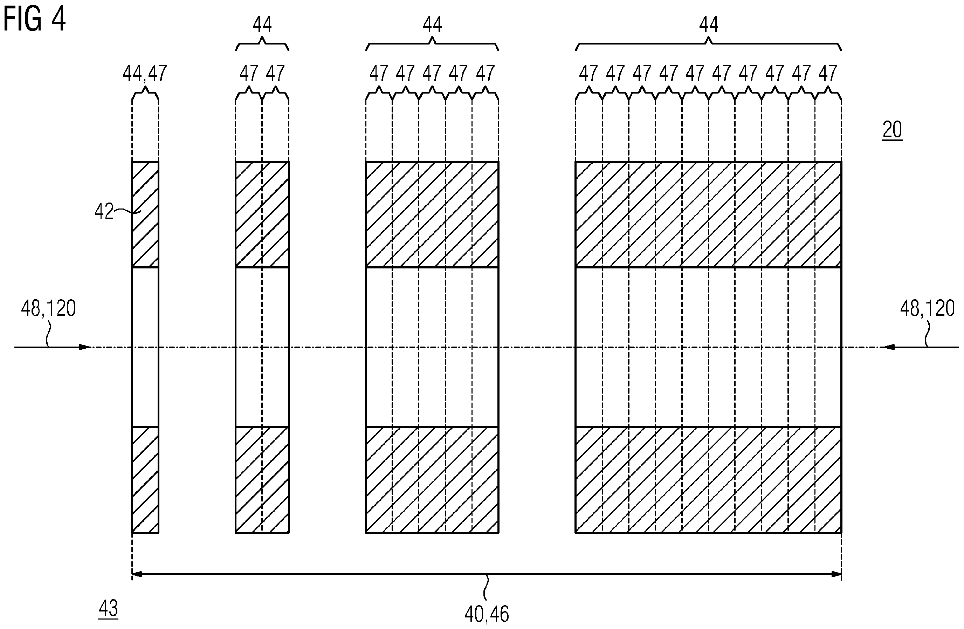

In FIG 4 ist schematisch eine Ansicht von lösbaren Abstandselementen 42 in einer dritten Ausführungsform der beanspruchten Wellenanordnung 20 abgebildet. Die lösbaren Abstandselemente 42 weisen unterschiedliche Dicken 44 auf, die exemplarisch ganzzahlige Vielfache einer Bezugsbreite 47 sind. Die lösbaren Abstandselemente 42 sind bei einem zweiten Schritt 120 eines Wartungsverfahrens 100 durch ein Zusammensetzen 48 zu einem Stapel 40 mit einer axialen Gesamtlänge 46 kombinierbar. Durch die sich einstellende axiale Gesamtlänge 46 ist eine Axialposition 43 eines nicht näher dargestellten Wellendichtrings 30 einstellbar. Bei der dritten Ausführungsform nach FIG 4 weist ein lösbares Abstandselement 42 eine Dicke 44 von einer Bezugsbreite 47 auf, ein weiteres lösbares Abstandselement 42 eine Dicke 44 von zwei Bezugsbreiten 47. Darüber hinaus weisen weitere lösbare Abstandselemente 42 eine Dicke von fünf und zehn Bezugsbreiten 47 auf. Jede mit den lösbaren Abstandselementen 42 bildbare Untermenge von eins, zwei oder drei lösbaren Abstandselementen 42 weist eine andere axiale Gesamtlänge 46 auf. Die mit den Dicken 44 der lösbaren Abstandselemente 42 bildbaren Untermengen sind somit summenfremd. Jede kombinatorisch mögliche Unterkombination der lösbaren Abstandselemente 42 führt damit zu einer anderen erzielbaren Axialposition 43 für den Wellendichtring 30. Somit wird mit einer geringen Anzahl an Komponenten eine hohe Anzahl an möglichen Axialpositionen 43 für den Wellendichtring 30 erzielt. Hierdurch werden die Vorteile der beanspruchten Lösung in erhöhtem Umfang erzielt.

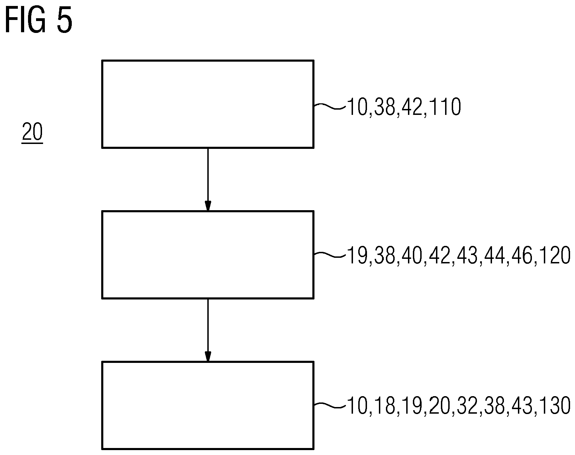

FIG 5 zeigt ein Ablaufdiagramm einer Ausführungsform des beanspruchten Verfahrens 100. In einem ersten Schritt 110 wird ein Wellendichtring 30, wie beispielsweise in FIG 1 bis FIG 4 dargestellt, zugänglich gemacht, soweit erforderlich. Des Weiteren wird im ersten Schritt 110 ein Austausch-Wellendichtring 38 bereitgestellt, durch den der in der Wellenanordnung 20 vorhandene Wellendichtring 30 auszutauschen ist. Nach dem ersten Schritt 110 sind der Wellendichtring 30 und eine Mehrzahl an lösbaren Abstandselementen 42, die eine Welle 10 der Wellenanordnung 20 umgeben, zugänglich. Es folgt ein zweiter Schritt 120, in dem der Wellendichtring 30 und die Mehrzahl an lösbaren Abstandselementen 42, die einen Stapel 40 bilden, aus der Wellenanordnung 20 entfernt werden. Des Weiteren wird der Stapel 40 im zweiten Schritt 120 in puncto Zusammensetzung verändert. Es wird zumindest ein lösbares Abstandselement 42 aus dem Stapel 40 entfernt, ein zusätzliches lösbares Abstandselement 42 hinzugefügt, einer ein lösbares Abstandselement 42 durch ein anderes ersetzt. Infolgedessen ergibt sich aus der Summe der einzelnen Dicken 44 der lösbaren Abstandselemente 42 eine veränderte axiale Gesamtlänge 46 des Stapels 40. Der Stapel 40 stützt sich im montierten Zustand an einer Schulter 19 ab und definiert so eine Axialposition 43 des einzusetzenden Austausch-Wellendichtrings 38. Somit wird im zweiten Schritt 120 die Axialposition 43 des Austausch-Wellendichtrings 38 eingestellt.

Es folgt ein dritter Schritt 130, in dem der Austausch-Wellendichtring 38 und der neu eingestellte Stapel 40 wieder im Bereich der Welle 10 montiert werden. Im montierten Zustand stützen sich der Stapel 40 mit den lösbaren Abstandselementen 42 und der Austausch-Wellendichtring 38 an einer Schulter 19, die an einer Gehäusewandung 18 ausgebildet ist. Im dritten Schritt 130 nimmt der Austausch-Wellendichtring 38 eine Axialposition 43 ein, durch die eine Dichtlippe 35 des Austausch-Wellendichtrings 38 axial von einer Rille 33 entfernt ist, die durch den zuvor eingesetzten Wellendichtring 30 an der Welle 10 ausgebildet ist. Dadurch entsteht mit dem Austausch-Wellendichtring 38 in Kontakt mit der Welle 10 ein neuwertiger Dichtabschnitt 32.

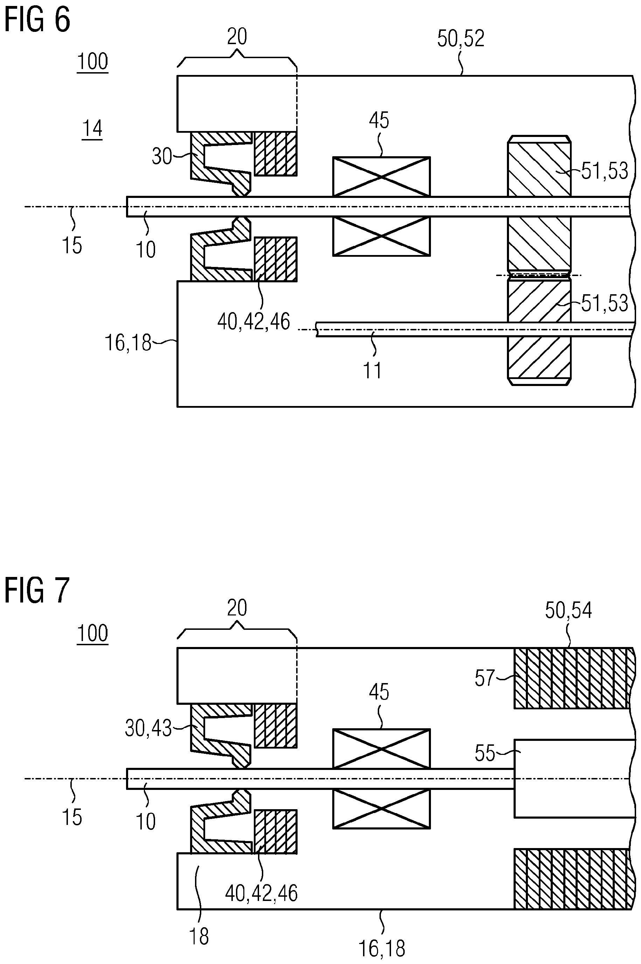

Eine Ausführungsform einer als Getriebe 52 ausgebildeten beanspruchten Maschine 50 ist in FIG 6 schematisch dargestellt. Das Getriebe 52 weist eine erste Welle 10 auf, die in einem Gehäuse 16 mit einer Gehäusewandung 18 aufgenommen ist und sich in eine Umgebung 14 erstreckt. Die erste Welle 10 ist drehbar in einem Lager 45 aufgenommen und mit einem Zahnrad 51 versehen, das mit einem weiteren Zahnrad 51 auf einer zweiten Welle 11 kämmt und so ein Zahnradpaar 53 ausbildet. Des Weiteren gehört die erste Welle 10 zu einer Wellenanordnung 20 gemäß einer der FIG 1 bis FIG 4. Die Wellenanordnung 20 umfasst auch einen Wellendichtring 30 und eine Mehrzahl an lösbaren Abstandselementen 42, die zwischen dem Lager 45 und der Gehäusewandung 18 angeordnet sind. Die lösbaren Abstandselemente 42 bilden einen Stapel 40, dessen axiale Gesamtlänge 46 einstellbar ist. Die beanspruchte Wellenanordnung 20 erlaubt es, durch ein entsprechendes Wartungsverfahren 100, die beispielsweise in FIG 3, FIG 4 oder FIG 5 skizziert, diese wiederholt zu erneuern. Durch die einfache und kosteneffiziente Wartung der Wellenanordnung 20 wird die wirtschaftlich sinnvolle Lebensdauer des Getriebes 52 erhöht.

Des Weiteren zeigt FIG 7 eine als elektrische Maschine 54 ausgebildete Maschine 50, die mit einer beanspruchten Wellenanordnung 20 ausgestattet ist. Die elektrische Maschine 54 ist als Motor oder Generator ausgebildet und weist einen Stator 57 auf, der in einem Gehäuse 16 mit einer Mehrzahl an Gehäusewandungen 18 aufgenommen ist. Innerhalb des Stators 57 ist ein Rotor 55 angeordnet, der im Betrieb in Drehung um eine erste Welle 10 versetzt wird. Die erste Welle 10 gehört zu einer beanspruchten Wellenanordnung 20 wie beispielsweise in FIG 1 bi FIG 4 gezeigt. Die Wellenanordnung 20 weist einen Wellendichtring 30 und eine Mehrzahl an lösbaren Abstandselementen 42 auf, die zugänglich gemacht werden. Durch ein Einstellen einer axialen Gesamtlänge 46 eines Stapels 40, der sich im Wesentlichen aus den lösbaren Abstandselementen 42 zusammensetzt, wird eine Axialposition 43 des Wellendichtrings 30 bestimmt. Der Wellendichtring 30 ist mittels eines Wartungsverfahrens 100, wie beispielsweise in FIG 4 und FIG 5 angedeutet, austauschbar ist. Durch ein Einstellen der axialen Gesamtlänge 46 des Stapels 40 ist beim Wartungsverfahren 100 eine verbesserte Dichtwirkung erzielbar. Durch eine entsprechend einfache und kosteneffiziente Wartung wird die wirtschaftlich sinnvolle Lebensdauer der elektrischen Maschine 54 in einfacher Weise erhöht.

## Patentansprüche

1. Wellenanordnung (20), umfassend eine Welle (10), die gegenüber einer Gehäusewandung (18) drehbar angebracht ist, wobei ein Wellendichtring (30) zwischen der Welle (10) und einem Dichtabschnitt (32) der Gehäusewandung (18) angeordnet ist, **dadurch gekennzeichnet, dass** die Wellenanordnung (20) eine Mehrzahl an lösbaren Abstandselementen (42) zu einem Einstellen einer Axialposition (43) des Wellendichtrings (42) aufweist.

2. Wellenanordnung (20) nach Anspruch 1, **dadurch gekennzeichnet, dass** der Wellendichtring (30) eine Dichtlippe (35) aufweist, die zu einem Erzeugen einer Rille (33) in der Welle (10) oder der Gehäusewandung (18) ausgebildet ist.

3. Wellenanordnung (20) nach einem der Ansprüche 1 oder 2, **dadurch gekennzeichnet, dass** die Abstandselemente (42) als Ringe oder C-förmig ausgebildet sind.

4. Wellenanordnung (20) nach einem der Ansprüche 1 bis 3, **dadurch gekennzeichnet, dass** zumindest zwei der lösbaren Abstandselemente (42) eine gleiche Dicke (44) aufweisen.

5. Wellenanordnung (20) nach einem der Ansprüche 1 bis 3, **dadurch gekennzeichnet, dass** zumindest zwei der lösbaren Abstandselemente (42) unterschiedliche Dicken (44) aufweisen.

6. Wellenanordnung nach Anspruch 5, **dadurch gekennzeichnet, dass** zumindest drei lösbare Abstandselemente (42) Dicken (44) aufweisen, deren Untermengen zueinander summenfremd sind.

7. Wellenanordnung (20) nach einem der Ansprüche 1 bis 6, **dadurch gekennzeichnet, dass** die Dicke (44) zumindest eines lösbaren Abstandselements (42) zumindest einer Breite (31) der Rille (33) der Dichtlippe (35) entspricht.

8. Wellenanordnung (20) nach einem der Ansprüche 1 bis 7, **dadurch gekennzeichnet, dass** die lösbaren Abstandselemente (42) zwischen einem Wellendichtring (30) und einem Lager (45) der Welle (10) angeordnet ist.

9. Wellenanordnung (20) nach einem der Ansprüche 1 bis 8, **dadurch gekennzeichnet, dass** der Wellendichtring (30) axial gegen die lösbaren Abstandselemente (42) vorgespannt ist und/oder an einer Gehäusewandung (18) eingepresst ist.

10. Getriebe (52), umfassend eine erste und eine zweite Welle (10, 11), die über zumindest ein Zahnradpaar (53) drehmomentübertragend miteinander verbunden sind, **dadurch gekennzeichnet, dass** die erste und/oder zweite Welle (10,11) zu einer Wellenanordnung (20) gemäß einem der Ansprüche 1 bis 9 gehört.

11. Elektrische Maschine (54), umfassend einen Stator (57) und einen Rotor (55), wobei der Rotor (55) mit einer Welle (10) drehmomentübertragend verbunden ist, **dadurch gekennzeichnet, dass** die Welle (10) zu einer Wellenanordnung (20) gemäß einem der Ansprüche 1 bis 9 gehört.

12. Verfahren (100) zur Wartung einer Wellenanordnung (20), die eine Welle (10) umfasst, die drehbar an einer Gehäusewandung (18) angebracht ist, umfassend die Schritte:
a) Entfernen eines Wellendichtrings (30) von der Welle (10) und Bereitstellen eines Austausch-Wellendichtrings (38);
b) Einstellen einer Axialposition (43) für den Austausch-Wellendichtring (38);
c) Anbringen des Austausch-Wellendichtrings (38) auf der Welle (10),
wobei im Schritt b) bei einer Mehrzahl von lösbaren Abstandselementen (42), die im Bereich der Welle (10) angebracht sind, zumindest ein lösbares Abstandselement (42) entfernt, hinzugefügt und/oder durch ein anderes lösbares Abstandselement (42) ersetzt wird.

13. Verfahren (100) nach Anspruch 12, **dadurch gekennzeichnet, dass** im Schritt b) die Axialposition (43) des Austausch-Wellendichtrings (38) gegenüber einer Axialposition (43) des Wellendichtrings (30) in einer Axialrichtung um mindestens eine Breite (31) einer von der Dichtlippe (35) erzeugten Rille (33) versetzt ist.
